# EUROPEAN PATENT APPLICATION

(11) **EP 4 711 653 A1**
(43) Date of publication of application: **18.03.2026**
(21) Application number: 24802732.8
(22) Date of filing: 18.04.2024
(51) Int. Cl.: F16K 1/36

(54) **VALVE**

(30) Priority: 08.05.2023 CN 202310511390
(71) Applicant: Horen Cortp Co., Ltd., Shanghai 200233 (CN)
(72) Inventor: FANG, Zhengwei, Shanghai 200233 (CN)
(74) Representative: Diehl & Partner
(86) International application number: PCT/CN2024/088626
(87) International publication number: WO 2024/230447

(57) **Abstract**

Disclosed is a valve, comprising: a housing (1), the housing (1) being internally provided with a passage passing through the housing (1); an inner valve seat (2), the inner valve seat (2) being disposed in the passage and sealedly connected to the housing (1); a flange (3), the flange (3) being located at one end of the housing (1); a valve core (4), the valve core (4) being movably arranged in the passage and located on the side of the inner valve seat (2) away from the flange (3); and a driving member (5), wherein the driving member (5) passes through the housing (1), and drives the valve core (4) to move towards the flange (3) to press against the inner valve seat (2) to close the passage or drives the valve core (4) to be separated from the inner valve seat (2) to open the passage . When the valve is closed, the valve core (4) applies a pressing force towards a container to the inner valve seat (2), such that the sealing effect is better.

## Description

This application claims the priority of the following Chinese patent application:
Filing date: May 8, 2023; Application number: 2023105113908; Invention title: Valve;
The entirety of the above application is incorporated herein by reference.

### Technical Field

The present invention relates to a storage container, in particular to a valve.

### Background

Existing valves for Intermediate bulk storage containers, such as butterfly valves, are opened by rotating the rotating shaft in the middle of the valve core, which drives the valve core to be rotated on both sides and opened. The valve core is generally located inside the valve body, and its flow rate is affected by the valve core and the rotating shaft. An existing valve seal is achieved by the valve core pressing the sealing ring toward a threaded port, that is, pressing the seal in a direction away from the container. When the high-temperature steam sterilization is required under such a sealing form, the steam will provide a pushing force toward the container to the valve core, causing the valve core being applied a pushing force away from the sealing ring, so that the sealing effect between the valve core and the sealing ring will be worse. This causes potential leakage when the valve is closed, resulting in poor sealing performance .

### Summary of the Invention

The object of the present invention is to provide a valve which has a better sealing performance .

In order to solve the above technical problems, an embodiment of the present invention provides a valve, comprising:
a housing, which has a passage extending therethrough;
an inner valve seat, which is disposed in the passage and in a sealed connection with the housing;
a flange, which is located at one end of the housing;
a valve core, which is movably disposed in the passage and located on a side of the inner valve seat away from the flange; and
a driving member, which passes through the housing, and drives the valve core to move toward the flange to press against the inner valve seat so as to close the passage, or drives the valve core to be separated from the inner valve seat to open the passage.

In an embodiment, the valve further comprises: a housing connector, which is located at one end of the housing facing or away from the flange and is detachably connected to the housing.

In an embodiment, the housing connector is snap-connected or threadedly connected to the housing.

In an embodiment, when the housing connector is snap-connected to the housing, the housing connector has a first connecting portion inserted into the housing and a second connecting portion located outside the housing; an outer wall surface of the first connecting portion has a first snapping member;
an inner surface of the housing has a second snapping member snap-connected to the first snapping member.

In an embodiment, a housing sealing ring is clamped between the housing connector and the housing.

In an embodiment, when the housing connector is snap-connected to the housing, a housing groove surrounding an end surface of the one end of the housing connected to the housing connector is provided, and the housing groove is open toward the passage;
the housing connector has a connector protrusion that is snapped into the housing groove, and the housing connector abuts against the housing at an end surface of one end of the housing connected to the housing connector.

In an embodiment, when the housing connector is located at the one end of the housing away from the flange, the valve further comprises:
an outer valve seat, which is disposed in the housing connector and is in a sealed connection with the housing connector; and
a valve cover, which is detachably connected to the housing connector, and when the valve cover covers the housing connector, the valve cover sealeds against the outer valve seat.

In an embodiment, when the housing connector is located at the one end of the housing facing the flange, the housing connector and the flange are integrated or two independent parts that are detachably connected.

In an embodiment, the passage has an inner valve seat buckling member arranged around the axis of the passage, an outer annular surface of one end of the inner valve seat buckling member away from the flange is separated apart from the passage to form a snap-in area, and the one end of the inner valve seat buckling member away from the flange has a protruding rib; the inner valve seat is operated such that one portion is located within the snap-in area and another portion is located outside the snap-in area, and the protruding rib is operatively snapped in the inner valve seat.

In an embodiment, the valve core is a flat structure; a protruding positioning rod is provided on a side of the valve core away from the driving member; a rod hole for inserting the positioning rod is provided on a wall surface of the passage; and the driving member drives the valve core to rotate around the axis of the positioning rod;
when the valve core rotates to a closed position, the valve core abuts against the inner valve seat to close the passage.

In an embodiment, a mounting hole for the driving member to pass through is formed on the housing, the mounting hole is communicated with the passage and is arranged opposite to the rod hole;
one end of the valve core facing the driving member is provided with a mounting surface, which has a guiding block protruding toward the driving member, and the guiding block has an inner contour guiding surface; a positioning post of the driving member is inserted into the mounting surface;
the driving member has a guiding rib, which has an outer contour guiding surface; the outer contour guiding surface cooperates with the inner contour guiding surface to drive the valve core to rotate around the axis of the positioning rod, and when the valve core rotates to a switching position, drive the end of the valve core connected to the driving member to move axially toward the inner valve seat to press the inner valve seat;
when the valve is closed, the valve core is operable to withstand liquid pressure, and the direction of the liquid pressure is opposite to the direction in which the valve core presses the inner valve seat.

Compared with the prior art, the embodiments of the present invention have a better sealing performance because the driving member drives the valve core to move toward the flange to press against the inner valve seat to close the passage or drives the valve core to separate from the inner valve seat to open the passage, so that when the valve is closed, the valve core applies an pressing force toward the container on the inner valve seat, even when the valve core is subjected to a pushing force toward the container generated by steam, the sealing performance between the valve core and the inner valve seat will become better and better, so that the sealing performance of the valve is better, and liquid is not prone to leak when the valve is used to close the container.

### BRIEF DESCRIPTION OF THE DRAWINGS

One or more embodiments are exemplarily illustrated by images in the corresponding drawings, these exemplifications do not constitute limitations on the embodiments, elements with the same reference numerals in the drawings are represented as similar elements, unless otherwise stated, the figures in the drawings do not constitute proportional limitations.
FIG.1 is an exploded view of a valve according to an embodiment of the present invention;
FIG.2 is an exploded view of a housing connector and a housing in one embodiment of the present invention;
FIG.3 is a schematic diagram of the assembly of the housing connector and the housing in FIG2 ;
FIG.4 is a schematic diagram showing the internal structure of a housing in one embodiment of the present invention;
FIG.5 is an exploded view of a housing connector and a housing in another embodiment of the present invention;
FIG.6 is a cross-sectional view of a valve according to another embodiment of the present invention;
FIG.7 is a schematic structural diagram of a housing according to an embodiment of the present invention;
FIG.8 is a schematic structural diagram of a driving member according to an embodiment of the present invention;
FIG.9 is a schematic structural diagram of a valve core at one angle according to an embodiment of the present invention;
FIG.10 is a schematic structural diagram of a valve core at another angle according to an embodiment of the present invention;
FIG.11 is a schematic diagram of the position of the handle of the driving member when the flow rate in the valve is maximum in one embodiment of the present invention;
FIG. 12 is a schematic structural diagram of the cooperation between the housing and the valve core in FIG.11;
FIG. 13 is a cross-sectional view of the cooperation between the driving member and the valve core in FIG.11;
FIG. 14 is a top cross-sectional view of the cooperation between the driving member and the valve core in FIG.11;
FIG.15 is a schematic diagram of the position of the handle of the driving member when the valve core is in the switching position in one embodiment of the present invention;
FIG.16 is a schematic structural diagram of the cooperation between the housing and the valve core in FIG.15;
FIG.17 is a top cross-sectional view of the cooperation between the driving member and the valve core in FIG.15;
FIG.18 is a schematic diagram of the position of the handle of the driving member when the valve is closed in one embodiment of the present invention;
FIG. 19 is a schematic structural diagram of the cooperation between the housing and the valve core in FIG.18;
FIG.20 is a top cross-sectional view of the cooperation between the driving member and the valve core in FIG.18 ;
FIG.21 is a schematic diagram of the position of the handle of the driving member after the guiding post is inserted into the guiding groove during the process of opening the valve from the closed state in FIG.18 ;
FIG.22 is a schematic structural diagram of the cooperation between the housing and the valve core in FIG.21;
FIG.23 is a top cross-sectional view of the cooperation between the driving member and the valve core in FIG.21;
FIG.24 is a schematic diagram of the position of the handle of the driving member after the valve core rotates a certain angle during the process of opening the valve from the state in FIG.21;
FIG.25 is a schematic structural diagram of the cooperation between the housing and the valve core in FIG.24;
FIG.26 is a top cross-sectional view of the cooperation between the driving member and the valve core in FIG24.

Lists of reference numerals: 100, valve; 1, housing; 11, second snapping member; 13, mounting hole; 14, guiding groove; 15, rod hole; 16, limiting edge; 17, housing limiting rib; 18, guiding edge; 2, inner valve seat; 3, flange; 4, valve core; 41, positioning rod; 42, mounting surface; 43, guiding block; 431, first guiding submodule; 4311, first starting portion; 4312, first ending portion; 4313, first limiting portion; 432, second guiding submodule; 4321, second starting portion; 4322, second ending portion; 4323, second limiting portion; 44, guiding post; 45, first extending plate; 46, second extending plate; 47, first valve core limiting rib; 48, second valve core limiting rib; 5, driving part; 51, positioning post; 53, driving rod; 54, handle; 55, guiding rib; 530, outer contour guiding surface; 531, first guiding module surface; 5311, first driving surface; 5312, first driven surface; 532, second guiding module surface; 5321, second driving surface; 5322, second driven surface; 10, passage; 6, housing connector; 61, first connecting portion; 611, first snapping member; 62, second connecting portion; 63, connector protrusion; 7, outer valve seat; 8, valve cover; 91, housing sealing ring; 12, housing groove; 92, inner valve seat buckling member; 93, protruding rib; 94, snap-in area; 95, flange sealing ring.

### DETAILED DESCRIPTION OF EMBODIMENTS

In order to make the purpose, technical solutions, and advantages of the embodiments of the present invention more clear, embodiments of the present invention will be described in detail below with reference to the accompanying drawings. However, those skilled in the art will appreciate that in the embodiments of the present invention, many technical details are provided to help readers better understand the present application. However, even without these technical details and various changes and modifications based on the following embodiments, the technical solutions claimed in the present application can still be implemented.

In the following description, for the purpose of illustrating the various disclosed embodiments, certain specific details are set forth in order to provide a thorough understanding of the various disclosed embodiments. However, those skilled in the relevant art will recognize that the embodiments may be practiced without one or more of these specific details. In other cases, well-known devices, structures, and techniques associated with this application may not be shown or described in detail to avoid unnecessarily obscuring the description of the embodiments.

Unless the context requires otherwise, throughout the specification and claims, the word "comprise" and variations such as "include" and "have" should be construed in an open, inclusive sense, that is, should be interpreted to mean "including, but not limited to."

The following will describe in detail various embodiments of the present invention in conjunction with the accompanying drawings to provide a clearer understanding of the objectives, features and advantages of the present invention. It should be understood that the embodiments shown in the accompanying drawings are not intended to limit the scope of the present invention, but are only intended to illustrate the essential spirit of the technical solution of the present invention.

Reference throughout this specification to "one embodiment" or "an embodiment" means that a particular feature, structure, or characteristic described in connection with the embodiments is included in at least one embodiment. Thus, the appearances of "in one embodiment" or "in an embodiment" in various places throughout this specification are not necessarily all referring to the same embodiment. Furthermore, the particular features, structures, or characteristics may be combined in any manner in one or more embodiments.

As used in this specification and the appended claims, the singular forms "a," "an," and "the" include plural referents unless the context clearly dictates otherwise. It should be noted that the term "or" is generally employed in its sense including "and/or" unless the context clearly dictates otherwise.

In the following description, in order to clearly show the structure and working mode of the present invention, many directional words will be used for description, but words such as "front", "back", "left", "right", "outside", "inside", "outward", "inward", "up", and "down" should be understood as convenient terms and should not be understood as restrictive terms.

Hereinafter, embodiments of the present invention will be described with reference to the accompanying drawings.

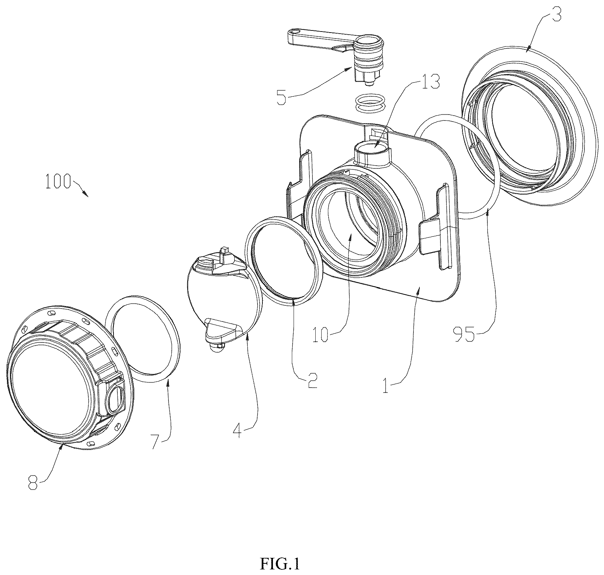

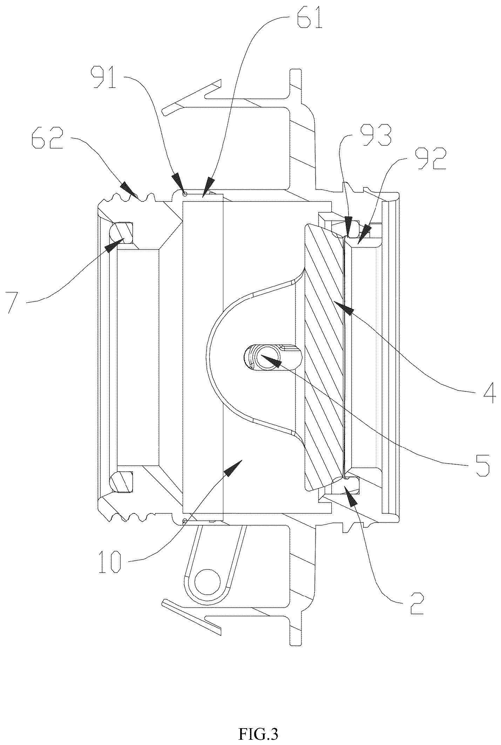

An embodiment of the present invention provides a valve 100. As shown in FIGS.1 and 3, valve 100 comprises a housing 1, an inner valve seat 2, a flange 3, a valve core 4, and a driving member 5. The inner valve seat 2 may be a sealing ring and can be located within the housing 1. Valve 100 can be installed on a container to use. When the valve is closed, it prevents liquid from flowing out of the container. When the valve is opened, liquid can flow into the passageway in the valve through the passageway in the flange and then be discharged. The housing 1 includes a passage 10 extending therethrough, which is the passage that allows liquid to pass through. The inner valve seat 2 is disposed within the passage 10 and is sealedly connected to the housing 1. The flange 3 is located at one end of the housing 1, a flange sealing ring 95 is clamped between the flange 3 and the housing 1. The flange 3 is used to connect to the container. The valve core is movably disposed within the passage 10 and located on the side of the inner valve seat 2 away from the flange 3. The driving member 5 passes through the housing 1, and drives the valve core 4 toward the flange 3 to press against the inner valve seat 2 to close the passage 10, or drives the valve core 4 away from the inner valve seat 2 to open the passage 10. When the valve is closed, the inner valve seat 2 is operable to withstand liquid pressure, the direction of the liquid pressure is opposite to the direction in which the valve core presses the inner valve seat 2. That is, when the valve is closed, the valve core 4 presses the inner valve seat 2 toward the container, and abuts against the inner valve seat 2 to close the passage 10, i.e., presses the inner valve seat 2 to the right as shown in FIG.3 .

As can be seen from the above, the driving member drives the valve core toward the flange to press against the inner valve seat to close the passage, or drives the valve core away from the inner valve seat to open the passage, so that when the valve is closed, the valve core applies a pressing force on the inner valve seat toward the container. During steam sterilization on the front face of the valve, the steam applies a pushing force to the valve core toward the container, this means that the compression between the valve core and the inner valve seat will be tighter, and the sealing performance will be better and better. The valve can withstand high-temperature steam sterilization on the front face of the valve, and liquid is unlikely to leak when the valve is used to close a container.

The implementation details of this embodiment are described in detail below. The following content is only for ease of understanding and is not necessary for implementing this solution.

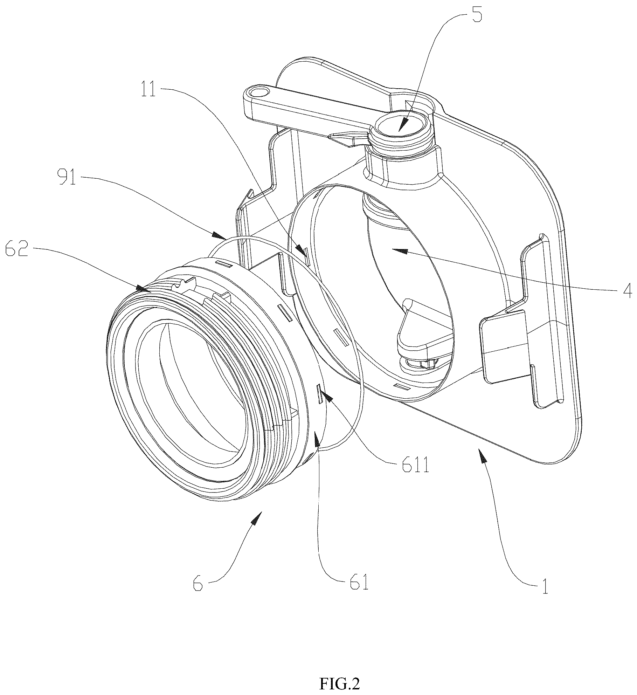

Furthermore, as shown in FIGS. 2 and 3, the valve 100 also comprises: a housing connector 6 that is detachably connected to the other end of the housing 1, and the flange and the housing connector 6 are respectively located at both ends of the housing connector 6. When installing the inner valve seat 7, the inner valve seat 7 and the valve core 4 and other components can be installed into the housing 1 in the event that the housing connector 6 is separated from the housing 1, and then the housing 1 connector and the housing connector 6 are connected together to facilitate the installation of the inner valve seat 7 and the valve core 4 and other components into the housing. The arrangement of the housing connector 6 can increase the diameter of the left opening of the housing 1, making it easier to install the valve core 4 and the inner valve seat 2 in this embodiment into the housing, and the diameter of the opening end of the housing connector 6 covered by the valve cover 8 can be set to a standard discharge diameter as required. In addition, in some embodiments, according to different processes, the housing connector 6 may be omitted, at this time, the valve cover 8 can directly cover the left opening end of the housing 1, or the housing connector can be understood as a part of the housing itself.

Alternatively, in other embodiments, the housing connector is located between the housing and the flange, and connects the housing to the flange, at this time, when installing components such as the inner valve seat and valve core, they can be inserted into the housing from the end of the housing facing the flange. The housing connector and the flange can be a single, integral connector or two detachably connected parts.

Furthermore, as shown in FIG.1 , the valve 100 further comprises an outer valve seat 7 and a valve cover 8, the outer valve seat 7 is disposed within and in a sealed connection with the housing connector 6, the valve cover 8 is detachably connected to the housing connector 6, and when the valve cover 8 covers the housing connector 6 , the valve cover 8 sealed against the outer valve seat 7. The valve cover 8 and the housing connector 6 can be threadedly engaged, and the outer valve seat 7 may be a sealing ring.

Furthermore, as shown in FIG. 2 , FIG. 3 and FIG. 5 , the housing connector 6 is snap-connected to the housing 1 .

Specifically, as shown in FIGS. 2 and 3, the housing connector 6 includes a first connecting portion 61 inserted into the housing 1, and a second connecting portion 62 located outside the housing 1. A first snapping member 611 is provided on the outer wall of the first connecting portion 61, and a second snapping member 11 is provided on the inner surface of the housing 1 to engage with the first snapping member 611. The first snapping member 611 is a protrusion, and the second snapping member11 is a groove, into which the protrusion snaps. In other embodiments, the first snapping member 611 may be a groove, and the second snapping member 11 may be a protrusion.

Furthermore, as shown in FIG. 2 and FIG. 3, a housing sealing ring 91 is clamped between the housing connector 6 and the housing 1.

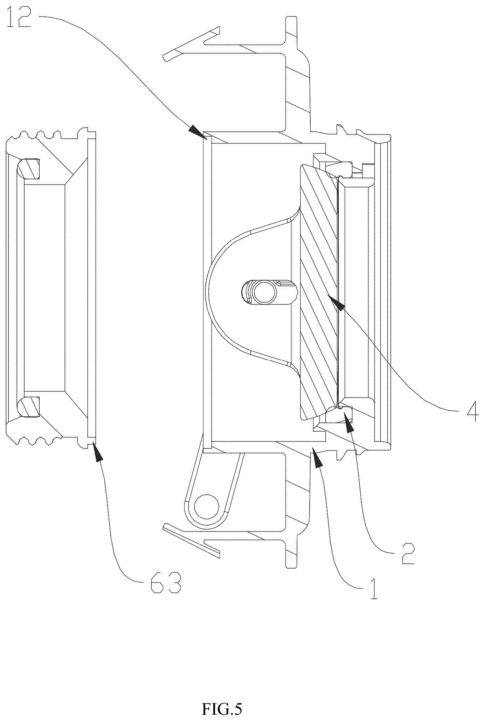

In some embodiments, as shown in FIG.5, the end surface of one end of the housing connected to the housing connector 6 has a surrounding housing groove 12, and the housing groove 12 is open toward the inside of the passage 10. The housing connector 6 has a connector protrusion 63 that snaps into the housing groove 12, and the end surface of the one end of the housing 1 connected to the housing connector 6 abuts against the housing connector 6, thereby achieving a snap-fit connection between the housing connector 6 and the housing 1.

In addition, in other embodiments, the housing connector 6 and the housing 1 may also be threadedly connected.

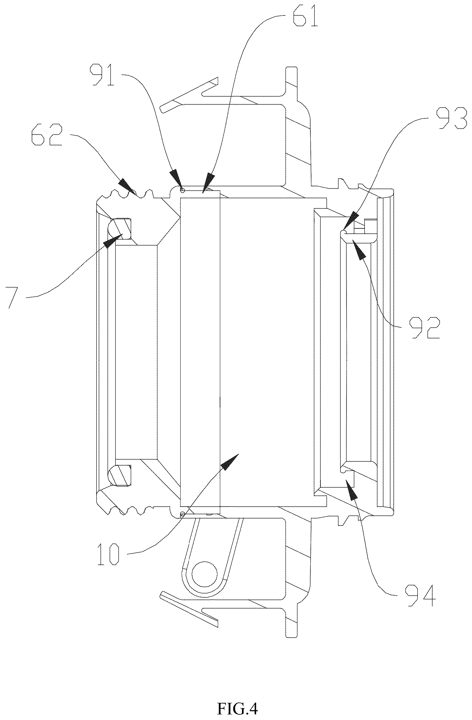

Furthermore, as shown in FIGS. 3 and 4, an inner valve seat buckling member 92 disposed around the axis of the passage 10 is provided inside the passage 10, an outer annular surface of the end of the inner valve seat buckling member 92 away from the flange 3 is separated from the passage 10 to form a snap-in area 94. The inner valve seat buckling member 92 has a protruding rib 93 on the end away from the flange 3. The inner valve seat 2 is operated such that one portion is located within the snap-in area 94 and another portion is located outside of the snap-in area 94, and the protruding rib 93 is operatively snapped in the inner valve seat 2. The inner valve seat buckling member 92 and the housing 1 can be integrally formed.

The valve core is a flat structure, such as the butterfly valve in this embodiment. It can be understood that in other embodiments, it can also be other structures such as a ball valve.

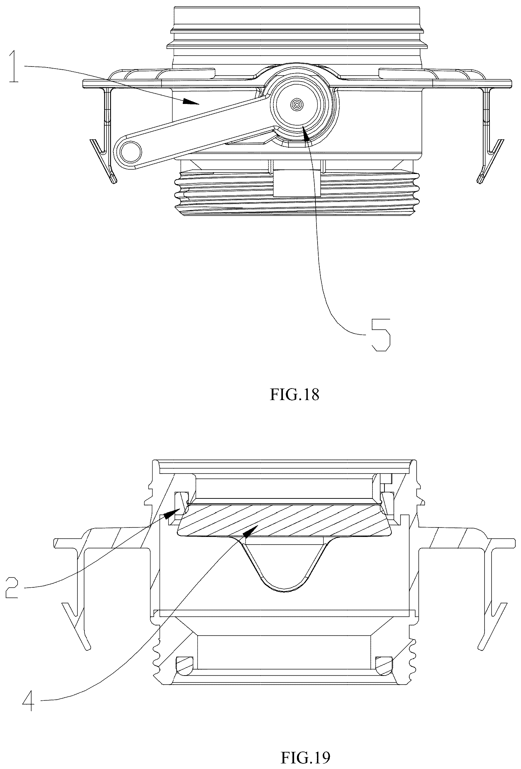

Furthermore, as shown in FIGs.1, 6, 7, 8, and 10, the valve core 4 has a protruding positioning rod 41 on the side away from the driving member 5, a rod hole 15 for inserting the positioning rod 41 is formed on a wall surface of the passage 10, and the positioning rod 41 is rotatably inserted into the rod hole 15, the driving member 5 drives the valve core 4 to rotate about the axis of the positioning rod 41. When the driving member 5 drives the valve core 4 to rotate, the positioning rod 41 rotates within the rod hole 15. The housing 1 is provided with a mounting hole 13 for the driving member 5 to pass through, the mounting hole 13 is communicated to the passage 10 and is opposite to the rod hole 15. When the valve core 4 is rotated to a closed position, as shown in FIGs.18, 19, and 20, the valve core 4 abuts against the inner valve seat 2, closing the passage 10. When rotated to other positions, the closed surface of the valve core 4 is offset from the passage 10, thereby opening the passage 10.

As shown in FIGS. 1, 6, 8, 9, and 13, the valve core 1 has a mounting surface 42 on the end facing the driving member 5, the mounting surface 42 has a guiding block 43 protruding toward the driving member 5, and the guiding block 43 has an inner contour guiding surface. A positioning post 51 of the driving member 5 is inserted into mounting surface 42. The driving member 5 includes a driving rod 53 connected to the positioning post 51 and a handle 54. The driving rod 53 passes through the mounting hole 13 and is inserted into the mounting surface 42. The handle is located outside the housing 1 and is connected to the driving rod 53, pushing the handle 54 to allow the driving rod 53 to drive the valve core 4 to rotate. The driving member 5 has a guiding rib 55 with an outer contour guiding surface 530, the outer contour guiding surface 530 cooperates with the inner contour guiding surface to drive the valve core 4 to rotate about the axis of the positioning rod 41, and when the valve core 4 rotates to the switching position, drive the end of the valve core 4 connected to the driving member 5 to move axially toward the inner valve seat 2 to press the inner valve seat 2.

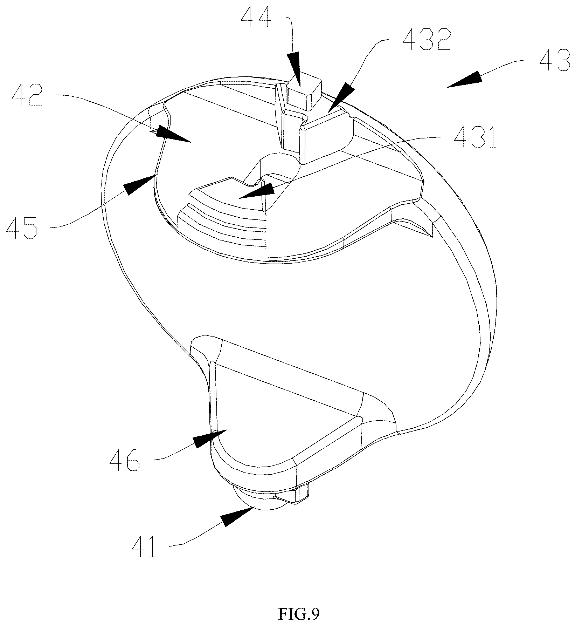

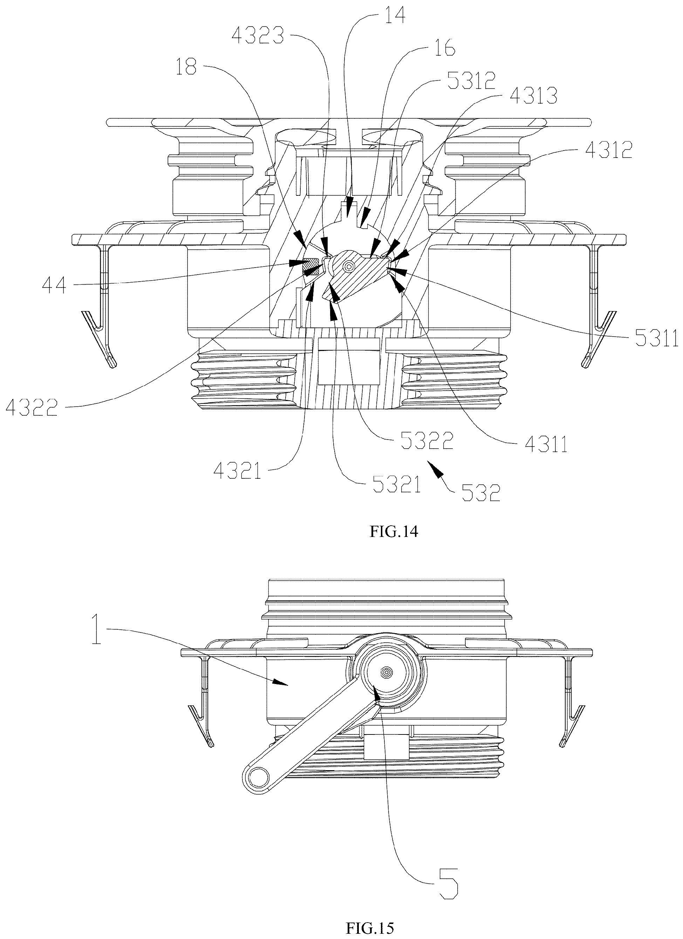

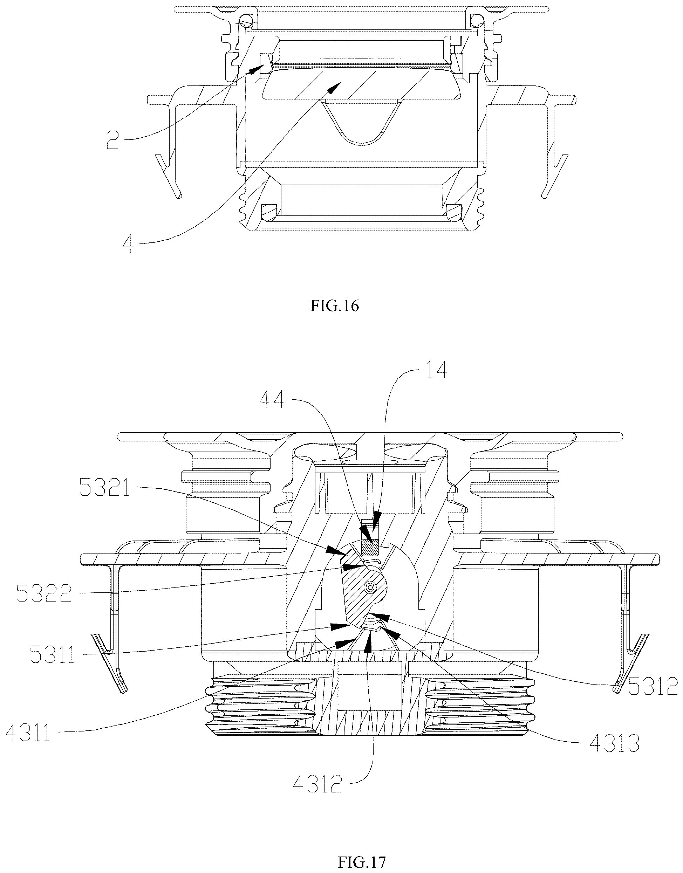

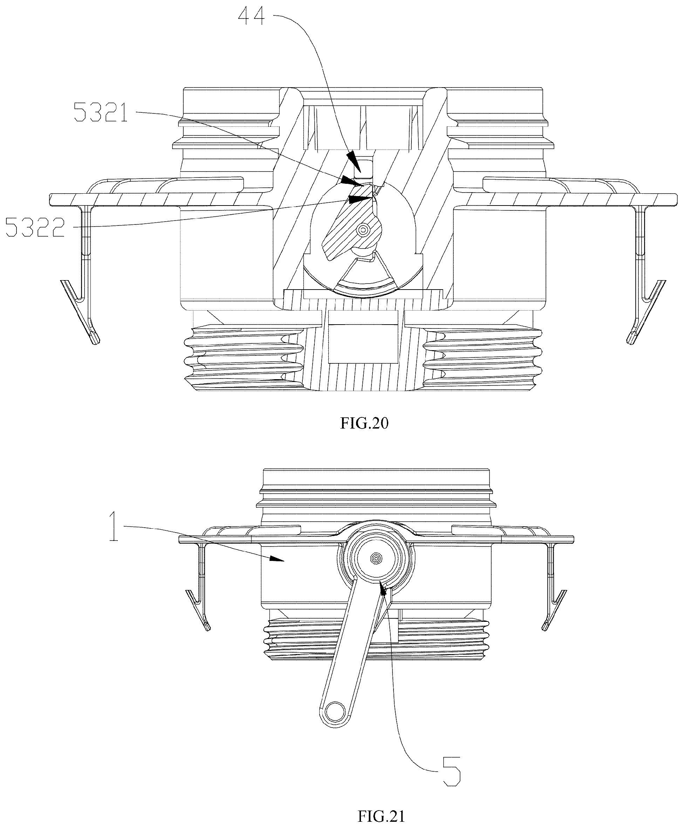

Furthermore, as shown in FIGs. 9, 13, 14, 17, and 20, a protruding guiding post 44 is provided on the end of the valve core 4 facing the driving member 5. The housing 1 is provided with a guiding groove 14 opened toward the valve core 4 and extending in the axis direction of the passage 10. As shown in FIGs. 15, 16, and 17, when the valve core 4 rotates to the switching position, the guiding post 44 directly faces the opening of the guiding groove 14, the driving member 5 drives the end of the valve core connected thereto to move axially toward the inner valve seat 2, allowing the guiding post 44 to insert into the guiding groove 14. In this embodiment, when the guiding post 44 is located outside the opening of the guiding groove 14, i.e., at the switching position, as shown in FIG.17, continuing to rotate the driving member 5, at this time, the driving member 5 does not rotate the valve core 4 while causes the valve core to be offset in the extending direction of the passage 10 toward the inner valve seat 2, allowing the guiding post 44 to insert into the guiding groove 14, as shown in FIG. 20; the valve core 4 is in tight contact with the inner valve seat 2 to achieve sealing, as shown in Figure 19. When the valve core 4 moves axially toward or away from the inner valve seat 2, the portion of the valve core 4 connected to the drive member 5 can move to drive the valve core 4 as a whole to tilt slightly toward or away from the inner valve seat 2, so that the valve core 4 can be tight contact with the inner valve seat 2 to achieve a better valve closing effect.

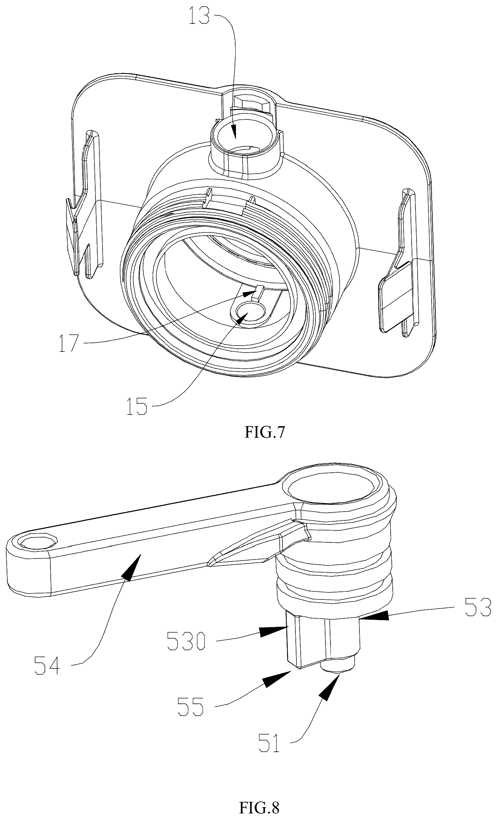

Furthermore, as shown in FIG. 9, the guiding block 43 has a first guiding submodule 431 and a second guiding submodule 432, which are arranged opposite to and spaced apart from each other. The second guiding submodule 432 is provided with a guiding post 44. As shown in FIGS. 7, 13, and 14, the inner contour guiding surface hass a first guiding module surface 531 and a second guiding module surface 532, which are arranged opposite to and spaced apart from each other, and are located on the first guiding submodule 431 and the second guiding submodule 432, respectively. The first guiding module surface 531 has a first starting portion 4311, a first ending portion 4312, and a first limiting portion 4313, which are connected in sequence and respectively extend in different directions. The second guiding module surface 532 has a second starting portion 4321, a second ending portion 4322, and a second limiting portion 4323, which are connected in sequence and respectively extend in different directions. The outer guiding surface 530 has a first drive module surface 531 and a second drive module surface 532, which are arranged opposite to and spaced apart from each other. The first drive module surface 531 has a first drive surface 5311 and a first driven surface 5312, which are connected in sequence; the second drive module surface 532 has a second drive surface 5321 and a second driven surface 5322, which are connected in sequence. As shown in the processes from FIG. 20 to FIG. 23 and then to FIG. 14, when the driving member is rotated counterclockwise as shown in the figure, the first driven surface 5312 operatively slides along the first starting portion 4311 to cooperates with the first limiting portion 4313, and the first drive surface 5311 cooperates with the first ending portion 4312, causing the guiding post 44 to slide out of the guiding groove 14, the first driven surface 5312 cooperates with the first limiting portion 4313 to operatively drive the valve core 4 to rotate in a radial direction of the passage 10, causing the guiding post 44 to rotate away from the guiding groove 14. As shown in the processes in FIGS. 17 to 20, that is, the driving member is rotated clockwise as shown in the figures, the second driven surface 5322 operatively slides along the second starting portion 4321 to cooperates with the second limiting portion 4323, and the second driving surface 5321 cooperates with the second ending portion 4322, causing the guiding post 44 to slide from the opening of the guiding groove 14 into the guiding groove 14, and the second driven surface 5322 cooperates with the second limiting portion 4323 to operatively drive the valve core 4 to rotate in the radial direction of the passage 10, causing the guiding post 44 to rotate toward the guiding groove 14. In other embodiments, the guiding block 43 can also be a single-piece structure.

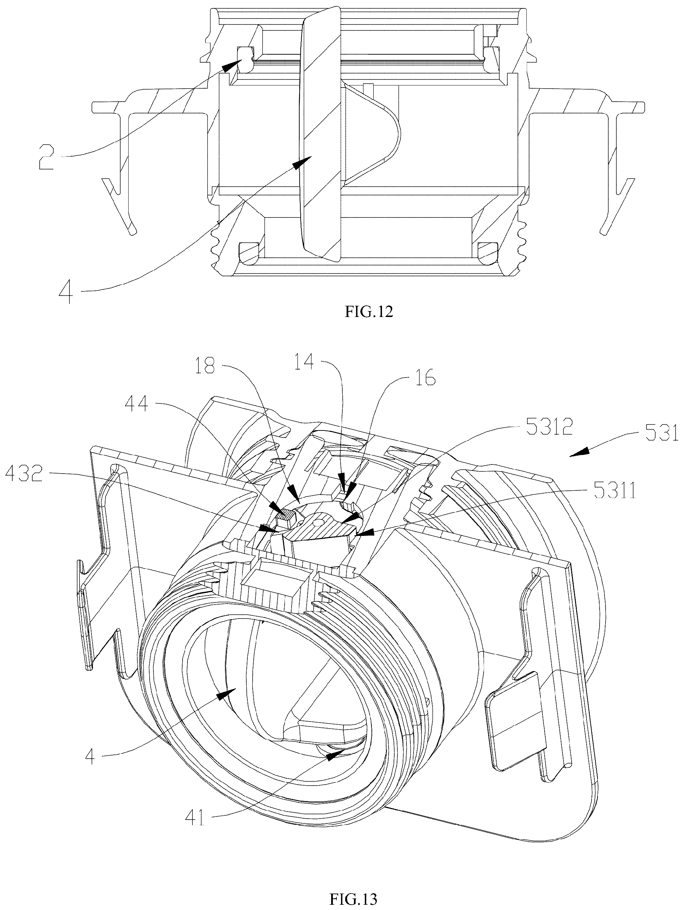

In addition, as shown in FIG. 13 and FIG. 17 , the housing has a limiting edge 16 extending toward the inside of the mounting hole 13. When the valve core 4 rotates to the switching position, the guiding post 44 abuts against the limiting edge 16 .

Furthermore, as shown in FIGS. 13 and 14, a guiding edge 18 is provided at the mounting hole 13, and the limiting edge 16 is connected to the guiding edge 18. When the valve core rotates in the radial direction of the passage 10, the guiding post 44 slides along the guiding edge 18. When the valve core rotates, the guiding edge 18 cooperates with the guiding post 44 to limit and guide the valve core 4. When the guiding post 44 slides along the guiding edge 18 until the valve core 4 is in the switching position (as shown in FIG. 17), the guiding post 44 abuts against the limiting edge 16, so that when the driving member 5 rotates, the valve core 4 is not driven to rotate while move axially toward the inner valve seat 2 .

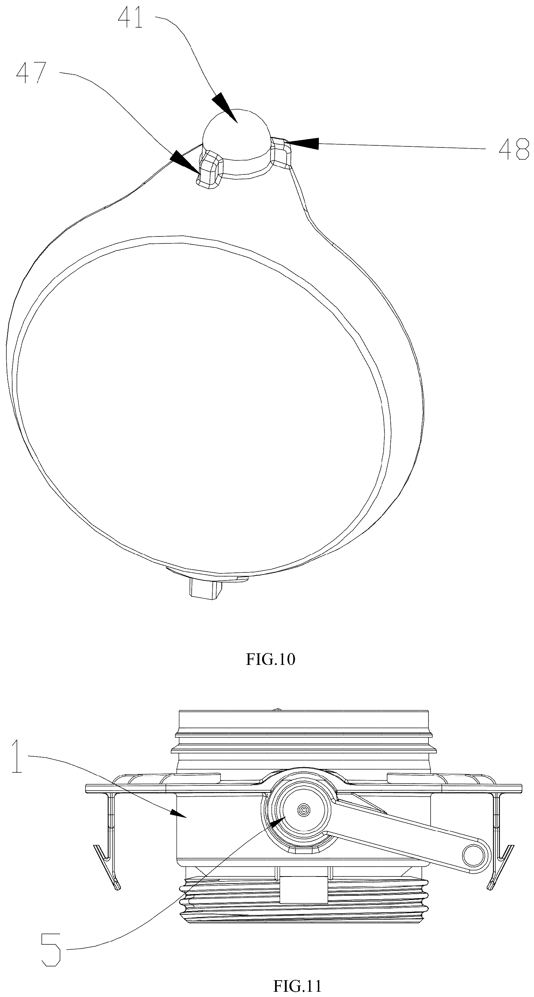

As shown in FIGs. 9 and 10, the valve core 4 has a valve disc, and a first extending plate 45 and a second extending plate 46. The first extending plate 45 and the second extending plate 46 are arranged opposite to each other and located on the side of the valve disc away from the inner valve seat 2. The guiding block 43 is provided on a top surface of the first extending plate 45, and the positioning rod 41 is provided on a bottom surface of the second extending plate 46.

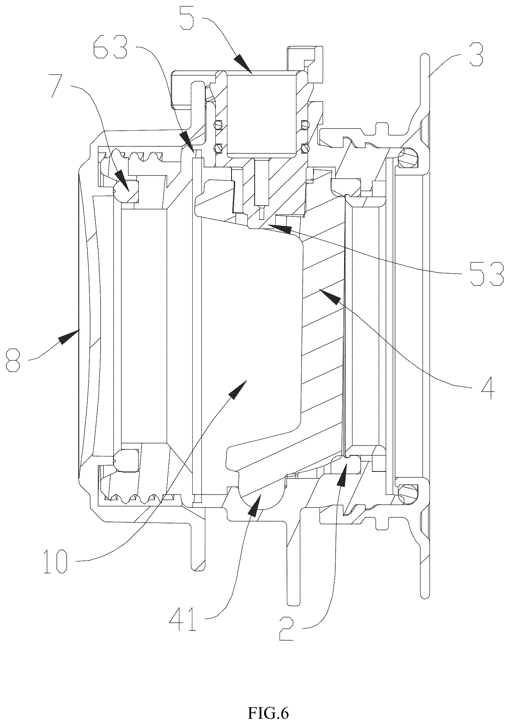

n addition, as shown in FIGs. 6, 7, and 10, the wall surface of the passage 10 is provided with a housing limiting rib 17, which located between the rod hole 15 and the inner valve seat 2. The side of the valve core away from the driving member 5 is provided with a first valve core limiting rib 47 and a second valve core limiting rib 48. As shown in FIGS. 15, 16, and 17, when the valve core 4 is in the switching position, the first valve core limiting rib 47 abuts against the housing limiting rib 17; as shown in FIGS. 11, 12, 13, and 14, when the valve core 4 is in the maximum valve flow position, the second valve core limiting rib 48 abuts against the housing limiting rib 17.

Specifically, when the valve is fully opened and the axis of the valve core 4 is perpendicular to the extending direction of the passage 10, as shown in FIG.11 , at this time, the first driven surface 5312 abuts against the first limiting portion 4313, as shown in FIGS. 13 and 14, and the first driving surface 5311 abuts against the first ending portion 4312, the joint between the first driven surface 5312 and the first driving surface 5311 is located between the area formed by the first limiting portion 4313 and the first ending portion 4312. The valve is operated from an open state to a closed state as follows: the driving member 5 is rotated clockwise, the handle is rotated from the position shown in FIG. 11 to the position shown in FIG. 14, and the valve core 4 is rotated from the position shown in FIG. 12 to the position shown in FIG.16, the second driven surface 5322 abuts against the second starting portion 4321, allowing the guiding rib 55 to push the second guiding submodule 432, thereby causing the driving member 5 to drive the valve core 4 to rotate in the radial direction of the passage 10, when the valve core 4 is rotated to the switching position shown in FIGS. 15, 16, and 17, the valve core 4 directly faces the cross-section of the passage 10, the axis of the valve core 4 and the extending direction of the passage 10 are substantially aligned, and the guiding post 44 is located at the opening of the guiding groove 14. Continuing to rotate the driving member 5 forward, due to the limiting edge 16, when in the switching position, the first valve core limiting rib 47 abuts against the housing limiting rib 17. As shown in FIGS. 18, 19 and 20, the second driven surface 5322 rotates forward and slides along the second starting portion 4321 to cooperate with the second limiting portion 4323, at this time, the valve core 4 is pushed by the guiding rib 55 to move axially toward the inner valve seat 2 to press the inner valve seat 2, and the guiding post 44 slides from the opening of the guiding groove 14 into the guiding groove 14 to close the valve.

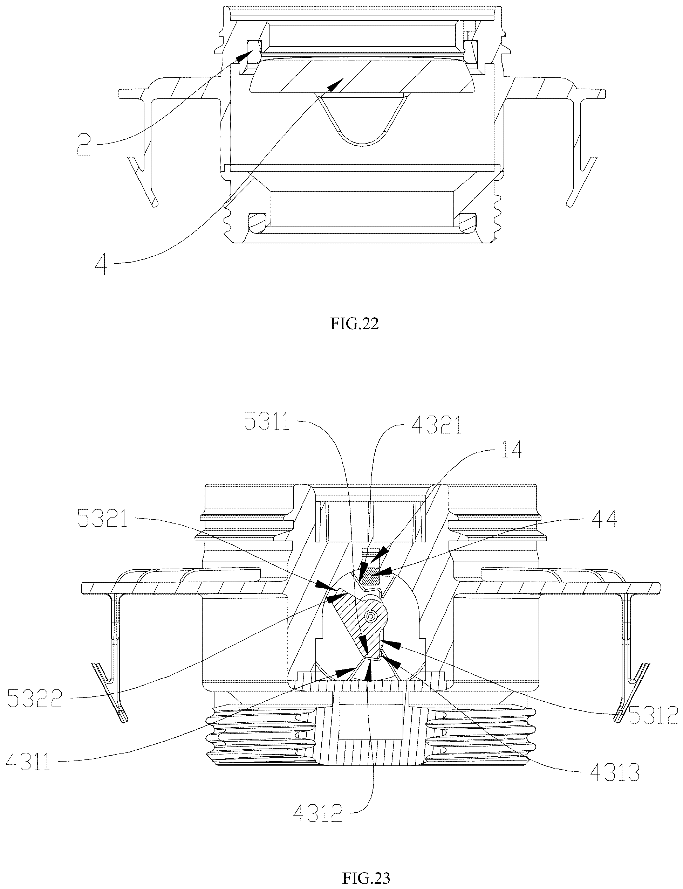

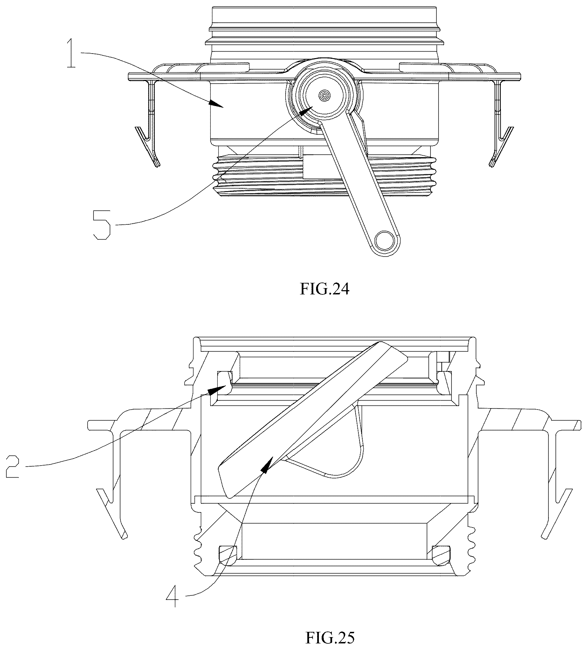

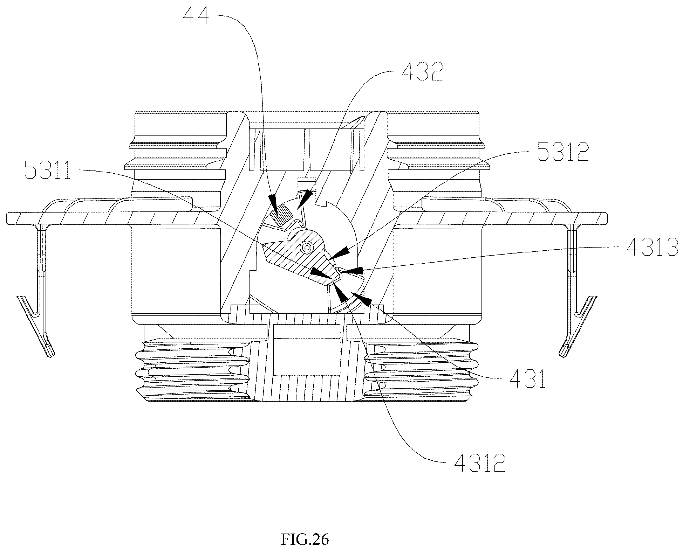

When the valve needs to be opened after being closed, the driving member 5 is rotated counterclockwise, as shown in FIGs. 21, 22 and 23, so that the first driven surface 5312 abuts against the first starting part 4311, and the first driven surface 5312 slides along the first starting part 4311 to cooperate with the first limiting part 4313, and the first driving surface 5311 cooperates with the first ending part 4312, the connection between the first driven surface 5312 and the first driving surface 5311 is located between the area formed by the first limiting portion 4313 and the first ending portion 4312, during this process, the guiding rib 55 pushes the first guiding sub-module 431 to allow the valve core 4 to move axially away from the inner valve seat 2, so that the guiding post 44 slides out of the guiding groove 14, that is, from the state of FIG. 20 to the state of FIG.23, the valve core 4 will not be in tight contact with the inner valve seat 2, which facilitates the subsequent rotational movement of the valve core 4. Continuing to rotate the driving member 5 counterclockwise, and the guiding rib 55 pushes the first guiding submodule 431 to rotate the valve core 4 counterclockwise, at this time, the valve core rotates in the radial direction of the passage 10, as shown in FIGs. 24, 25, and 26, allowing the valve to be opened gradually, when the valve is opened to the maximum flow state, it is as shown in FIG. 12.

While preferred embodiments of the present invention have been described in detail above, it should be understood that aspects of the embodiments can be modified, if necessary, to employ aspects, features and concepts of the various patents, applications and publications to provide further embodiments.

These and other changes can be made to the embodiments in light of the above detailed description.In general, in the claims, the terms used should not be construed as limited to the specific embodiments disclosed in the specification and claims, but should be construed to include all possible embodiments along with the full scope of equivalents to which these claims are entitled.

Those skilled in the art will appreciate that the above-mentioned embodiments are specific examples for implementing the present invention, and that in actual applications, various changes may be made thereto in form and detail without departing from the spirit and scope of the present invention.

## Claims

1. A valve comprising:
a housing, which has a passage extending therethrough;
an inner valve seat, which is disposed in the passage and in a sealed connection with the housing;
a flange, which is located at one end of the housing;
a valve core, which is movably disposed in the passage and located on a side of the inner valve seat away from the flange; and
a driving member, which passes through the housing, and drives the valve core to move toward the flange to press against the inner valve seat so as to close the passage , or drives the valve core to be separated from the inner valve seat to open the passage.

2. The valve according to claim 1, wherein the valve further comprises: a housing connector, which is located at one end of the housing facing or away from the flange and is detachably connected to the housing.

3. The valve according to claim 2, wherein the housing connector is snap-connected or threadedly connected to the housing.

4. The valve according to claim 3, wherein when the housing connector is snap-connected to the housing, the housing connector has a first connecting portion inserted into the housing and a second connecting portion located outside the housing; an outer wall surface of the first connecting portion has a first snapping member;
an inner surface of the housing has a second snapping member snap-connected to the first snapping member.

5. The valve according to claim 3, wherein a housing sealing ring is clamped between the housing connector and the housing.

6. The valve according to claim 3, wherein when the housing connector is snap-connected to the housing, a housing groove surrounding on an end surface of the one end of the housing connected to the housing connector is provided, and the housing groove is open toward the passage;
the housing connector has a connector protrusion that is snapped into the housing groove, and the housing connector abuts against the housing at the end surface of one end of the housing connected to the housing connector.

7. The valve according to claim 2, wherein when the housing connector is located at the one end of the housing away from the flange, the valve further comprises:
an outer valve seat, which is disposed in the housing connector and is in a sealed connection with the housing connector; and
a valve cover, which is detachably connected to the housing connector, and when the valve cover covers the housing connector, the valve cover seals against the outer valve seat.

8. The valve according to claim 2, wherein when the housing connector is located at one end of the housing facing the flange, the housing connector and the flange are integrated or two independent parts that are detachably connected.

9. The valve according to claim 1, wherein the passage has an inner valve seat buckling member arranged around the axis of the passage, an outer annular surface of one end of the inner valve seat buckling member away from the flange is separated apart from the passage to form a snap-in area, and the one end of the inner valve seat buckling member away from the flange has a protruding rib; the inner valve seat is operated such that one portion is located within the snap-in area and another portion is located outside the snap-in area, and the protruding rib is operatively snapped in the inner valve seat.

10. The valve according to claim 1, wherein the valve core is a flat structure; a protruding positioning rod is provided on a side of the valve core away from the driving member; a rod hole for inserting the positioning rod is provided on a wall surface of the passage; and the driving member drives the valve core to rotate around the axis of the positioning rod;
when the valve core rotates to a closed position, the valve core abuts against the inner valve seat to close the passage.

11. The valve according to claim 1, wherein a mounting hole for the driving member to pass through is formed on the housing, the mounting hole is communicated with the passage and is arranged opposite to the rod hole;
one end of the valve core facing the driving member is provided with a mounting surface, which has a guiding block protruding toward the driving member, and the guiding block has an inner contour guiding surface; a positioning post of the driving member is inserted into the mounting surface;
the driving member has a guiding rib, which has an outer contour guiding surface; the outer contour guiding surface cooperates with the inner contour guiding surface to drive the valve core to rotate around the axis of the positioning rod, and when the valve core rotates to a switching position, drive the end of the valve core connected to the driving member to move axially toward the inner valve seat to press the inner valve seat;
when the valve is closed, the valve core is operable to withstand liquid pressure, and the direction of the liquid pressure is opposite to the direction in which the valve core presses the inner valve seat.
